# EUROPEAN PATENT APPLICATION

(11) **EP 3 505 323 A1**
(43) Date of publication of application: **03.07.2019**
(21) Application number: 18210327.5
(22) Date of filing: 05.12.2018
(51) Int. Cl.: B29C 33/60, C08G 65/26, B29C 64/40

(54) **3D PRINTER SUPPORT MATERIAL REMOVAL COMPOSITION, MODEL MATERIAL MOLDED ARTICLE, MODEL MATERIAL MOLDED ARTICLE FINISHING AGENT AND METHOD FOR PRODUCING MODEL MATERIAL MOLDED ARTICLE**

(30) Priority: 27.12.2017 JP 2017251883
(71) Applicant: Nicca Chemical Co., Ltd., Fukui-shi, Fukui 910-8670 (JP)
(72) Inventor: SUEYOSHI, Masatomo, Fukui-shi, Fukui 910-8670 (JP); TANEMURA, Atsushi, Fukui-shi, Fukui 910-8670 (JP)
(74) Representative: Regimbeau

(57) **Abstract**

Provided is a 3D printer support material removal composition that prevents whitening of model material molded articles, a model material molded article, a model material molded article finishing agent, and a method for producing a model material molded article. The 3D printer support material removal composition contains at least one type of compound selected from compounds represented by the following general formula (1):

R-O-[(EO)ₐ/(PO)_{b}]-H ... (1)

(wherein, R represents a hydrocarbon group having 6 to 22 carbon atoms, a represents 0 to 2 and b represents 0 to 3 in the case R represents a hydrocarbon group having 6 to 20 carbon atoms, a represents 0 to 10 and b represents 0 in the case R represents a hydrocarbon group having 21 to 22 carbon atoms, EO represents an ethyleneoxy group and PO represents a propyleneoxy group) .

## Description

### TECHNICAL FIELD

The present invention relates to a 3D printer support material removal composition, a model material molded article, a model material molded article finishing agent and a method for producing a model material molded article.

### BACKGROUND ART

3D printers have recently expanded into a wide range of fields such as construction, health care, education or aerospace in addition to the manufacturing industry. 3D printers are a kind of rapid prototyping device (three-dimensional modeling machine). 3D printers are devices used to produce three-dimensional models by sequentially depositing materials based on 3D-CAD or 3D-CG data.

There are several types of modeling methods used to produce three-dimensional models and the properties of the materials and three-dimensional models produced differ for each method. Consequently, it is necessary to select the modeling method that is suitable for the particular application. Typical examples of modeling methods include fused deposition modeling, ink jet modeling (material jetting), binder jetting and powder sintering modeling.

Fused deposition modeling is a method that consists of extruding a resin melted with heat from a nozzle and layering the molten resin to produce a three-dimensional model.

Ink jet modeling consists of solidifying resin sprayed from an ink jet head with ultraviolet light to produce a three-dimensional model.

Binder jetting method consists of spraying a liquid binder from an ink jet head followed by depositing powder one layer at a time followed by solidifying the deposited powder to produce a three-dimensional model.

Powder sintering consists of irradiating a powdered material with a laser to sinter the powder and produce a three-dimensional model.

Fused deposition modeling and ink jet modeling are frequently used as modeling methods.

Fused deposition modeling makes it possible to produce three-dimensional models having strength that is comparable to that of plastic products while also enabling the production of colorful three-dimensional models, thereby offering numerous color variations.

Ink jet modeling allows the production of diverse and hard three-dimensional models and colorful three-dimensional models by mixing multiple materials while also enabling the production of highly precise three-dimensional models.

However, in the cases of fused deposition modeling or ink jet modeling, there are cases in which support materials are required for supporting the three-dimensional model until it has solidified. In such cases, a step is required for removing the support material after the three-dimensional model has solidified.

Molded articles (to also be referred to as model material molded articles) are obtained by removing unnecessary support material from the model material of a three-dimensional model. At this time, the surface of the model material molded article may become white (to also be referred to as whitening) depending on the modeling conditions, thereby preventing the inherent color tone thereof from being obtained.

Although the whitened surface of a model material molded article is subjected to post-processing performed by a worker in which the whitened portion is restored manually using a rasp or resin stain removal agent and the like, not only does this result in a significant reduction in workability, but may also damage the surface of the model material molded article, thereby making this undesirable. Accordingly, there is a desire for a support material removal composition capable of removing the support material from a model material and preventing whitening without damaging the surface of the model material molded article.

With respect to the removal of support materials, Patent Document 1 discloses a 3D printer model developer composition comprising: (a) 1% by weight to 20% by weight of a water-soluble organic solvent, (b) 0.5% by weight to 20% by weight of an alkaline metal hydroxide, (c) 0.2% by weight to 20% by weight of an organic alkali agent, and (d) 0.1% by weight to 20% by weight of a surfactant, and water; wherein, the weight ratio (b)/(c) of the content of (b) to the content of (c) is 1/4 to 1/0.4.

Patent Document 2 discloses a three-dimensional modeling method, comprising: modeling a three-dimensional object by depositing a model material and a support material according to a cross-sectional mask pattern of a three-dimensional model, followed by coating the aforementioned three-dimensional object with an aqueous alkaline solution to remove the support material from the three-dimensional object.

Patent Document 3 discloses a method for producing a model material molded article, comprising: obtaining a model material molded article by immersing a crude model formed from (A) a model material used to form a molding and (B) a support material that supports the shape of (A) in water serving as a cleaning solution (C), and separating the support material (B) from the interface with the model material (A) by causing the support material (B) to swell.

### [Prior Art Documents]

### [Patent Documents]

[Patent Document 1] Japanese Unexamined Patent Application, First Publication No. 2014-83744
[Patent Document 2] Japanese Unexamined Patent Application, First Publication No. 2011-5658
[Patent Document 3] International Republication No. WO 2016/125816

### DISCLOSURE OF THE INVENTION

### [Problems to be Solved by the Invention]

However, the 3D support material removal methods of Patent Documents 1 to 3 fail to adequately demonstrate an effect that prevents whitening of model material molded articles.

With the foregoing in view, an object of the present invention is to provide a 3D printer support material removal composition that prevents whitening of model material molded articles, a model material molded article, a model material molded article finishing agent, and a method for producing a model material molded article.

### [Means for Solving the Problems]

As a result of conducting extensive studies to achieve the aforementioned object, the inventors of the present invention discovered a 3D printer support material removal composition that prevents whitening of model material molded articles, thereby leading to completion of the present invention.

Namely, the present invention has the embodiments indicated below.
[1] A 3D printer support material removal composition, containing at least one type of compound selected from compounds represented by the following general formula (1):

   R-O-[(EO)ₐ/(PO)_{b}]-H ··· (1)

   (wherein, R represents a hydrocarbon group having 6 to 22 carbon atoms, a represents 0 to 2 and b represents 0 to 3 in the case R represents a hydrocarbon group having 6 to 20 carbon atoms, a represents 0 to 10 and b represents 0 in the case R represents a hydrocarbon group having 21 to 22 carbon atoms, EO represents an ethyleneoxy group and PO represents a propyleneoxy group) .
[2] A model material molded article treated with the 3D printer support material removal composition described in [1] above.
[3] A method for producing a model material molded article, including a step for obtaining a model material molded article by removing a support material that supports the shape of the model material from a three-dimensional model containing the model material and the support material using the 3D printer support material removal composition described in [1] above.
[4] A model material molded article finishing agent containing at least one type of compound selected from compounds represented by the following general formula (1):

   R-O-[(EO)ₐ/(PO)_{b}]-H ··· (1)

   (wherein, R represents a hydrocarbon group having 6 to 22 carbon atoms, a represents 0 to 2 and b represents 0 to 3 in the case R represents a hydrocarbon group having 6 to 20 carbon atoms, a represents 0 to 10 and b represents 0 in the case R represents a hydrocarbon group having 21 to 22 carbon atoms, EO represents an ethyleneoxy group and PO represents a propyleneoxy group).

### [Effects of the Invention]

According to the present invention, a 3D printer support material removal composition that prevents whitening of model material molded articles, a model material molded article, a model material molded article finishing agent, and a method for producing a model material molded article can be provided.

### EMBODIMENTS FOR CARRYING OUT THE PRESENT INVENTION

The following provides a detailed explanation of preferred embodiments of the present invention. However, the present invention is not limited to the following embodiments.

### <3D Printer Support Material Removal Composition>

The 3D printer support material removal composition of the present invention comprises one type of compound selected from compounds represented by the following general formula (1):

R-O-[(EO)ₐ/(PO)_{b}]-H ··· (1)

(wherein, R represents a hydrocarbon group having 6 to 22 carbon atoms, a represents 0 to 2 and b represents 0 to 3 in the case R represents a hydrocarbon group having 6 to 20 carbon atoms, a represents 0 to 10 and b represents 0 in the case R represents a hydrocarbon group having 21 to 22 carbon atoms; EO represents an ethyleneoxy group and PO represents a propyleneoxy group).

R of the compounds represented by general formula (1) represents a hydrocarbon group having 6 to 22 carbon atoms.

In the case the number of added moles, a, of ethylene oxide (EO) in general formula (1) and the number of added moles, b, of propylene oxide (PO) in general formula (1) are both 0, the compound represented by general formula (1) is a monovalent alcohol (R-OH).

In the case R represents a hydrocarbon group having 6 to 20 carbon atoms, the number of added moles, a, of ethylene oxide in general formula (1) is preferably 0 to 2 from the viewpoint of preventing whitening and preferably 1 to 2 from the viewpoint of obtaining an agent form in consideration of solubility in water.

In the case R represents a hydrocarbon group having 6 to 20 carbon atoms, the number of added moles, b, of propylene oxide in general formula (1) is preferably 0 to 3 from the viewpoint of preventing whitening and preferably 0 to 2 from the viewpoint of obtaining an agent form in consideration of solubility in water.

In the case the number of carbons of R is 8 to 10, the raw material has a characteristic odor. In order to control this odor, the number of added moles, a, of ethylene oxide in general formula (1) is preferably 1 to 2. The number of added moles, b, of propylene oxide in general formula (1) is preferably 1 to 3.

In the case R represents a hydrocarbon group having 21 to 22 carbon atoms, the number of added moles, a, of ethylene oxide in general formula (1) is preferably 0 to 10 from the viewpoint of preventing whitening and is preferably 1 to 2 from the viewpoint of obtaining an agent form in consideration of solubility in water.

In the case R represents a hydrocarbon group having 21 to 22 carbon atoms, the number of added moles, b, of propylene oxide in general formula (1) is preferably 0 from the viewpoint of obtaining an agent form in consideration of solubility in water.

R of compounds represented by general formula (1) may be linear or cyclical, saturated or unsaturated, and aliphatic or aromatic. In addition, linear compounds may be straight or branched.

In the case pluralities of EO and PO are simultaneously contained in general formula (1), the moiety [(EO)ₐ/(PO)_{b}] may indicate that EO and PO are added in block form or may indicate that EO and PO are added in random form. Furthermore, the number of added moles, a, of EO can be measured by a technique such as gas chromatography. This applies similarly to the added number of moles, b, of PO.

Specific examples of compounds represented by general formula (1) include: 1-hexanol, phenylmethanol, 1-octanol, 2-ethylhexanol, 2-butyl-1-octanol, 1-decanol, 1-dodecanol, 2-tridecanol, 4-nonylphenol, 1-hexadecanol, 1-octadecanol, 9-octadecen-1-ol, 2-octyl-1-dodecanol, 1-docosanol, 1-hexanol (1 to 2-mole ethylene oxide adduct), 2-ethylhexanol (1 to 2-mole ethylene oxide adduct), 2-ethylhexanol (1-mole propylene oxide adduct), 2-ethylhexanol (2-mole ethylene oxide, 1.5-mole propylene oxide adduct), 2-ethylhexanol (3-mole propylene oxide, 2-mole ethylene oxide adduct), 1-dodecanol (2-mole ethylene oxide adduct), 2-tridecanol (2-mole ethylene oxide adduct), 5-mole ethylene oxide adduct of 1-docosanol, and 10-mole ethylene oxide adduct of 1-docosanol.

One type of compound represented by general formula (1) may be used alone or two or more types may be used in combination.

From the viewpoint of preventing whitening, the solubility in water at 20°C of compounds represented by general formula (1) is preferably 5.0 g/100 g or less of water, more preferably 2.0 g/100 g or less of water and even more preferably 1.0 g/100 g or less of water.

Solubility in water at 20°C is, for example, about 0. 6 g/100 g of water for 1-hexanol, about 1. 0 g/100 g of water for 1-hexanol (1-mole ethylene oxide adduct), about 1. 7 g/100 g of water for 1-hexanol (2-mole ethylene oxide adduct), about 4.0 g/100 g of water for benzyl alcohol, about 0.05 g/100 g of water for 1-octanol, about 0.1 g/100 g of water for 2-ethylhexanol, about 0.2 g/100 g of water for 2-ethyl hexanol (1-mole ethylene oxide adduct), about 0.3 g/100 g of water for 2-ethylhexanol (2-mole ethylene oxide adduct), 0.004 g/100 g of water for 1-decanol, about 0.3 g/100 g of water for 4-nonylphenol, about 0.0002 g/100 g of water for 1-hexadecanol and about 0.0001 g/100 g of water for 9-octadecen-1-ol.

R in compounds represented by general formula (1) of the present invention preferably has a branch such as a 2-ethylhexyl group, 2-butyl-1-octyl group or 2-tridecyl group from the viewpoint of preventing whitening.

The content of a compound represented by general formula (1) is preferably 0.05% by weight to 100% by weight, more preferably 0.2% by weight to 100% by weight, and even more preferably 0.3% by weight to 100% by weight based on the total weight of the 3D printer support material removal composition from the viewpoint of preventing whitening.

In the case the 3D printer support material removal composition of the present invention contains water such as tap water or ion exchange water, the compound represented by general formula (1) is preferably homogeneous to a degree that it does not separate from water (to be referred to as being emulsified and dispersed) or becomes soluble in water. The 3D printer support material removal composition of the present invention may further contain a surfactant in order to make a compound represented by general formula (1) soluble or emulsified and dispersed in water.

Furthermore, in the present description, "making soluble in water" refers to the 3D printer support material removal composition being in the form of a clear aqueous solution.

There are no particular limitations on the surfactant provided it is able to make the compound represented by general formula (1) soluble in water or emulsify and disperse in water, and examples of surfactants that can be used include nonionic surfactants, anionic surfactants, amphoteric surfactants and cationic surfactants, excluding compounds represented by general formula (1).

Examples of nonionic surfactants include known nonionic surfactants. More specifically, examples of nonionic surfactants include polyalkylene glycol types such as higher alcohol alkylene oxide adducts, fatty acid ester products of higher alcohol alkylene oxide adducts, alkyl or alkenyl phenol alkylene oxide adducts, fatty acid alkylene oxide adducts, higher fatty acid ester products of alkylene oxide adducts of polyvalent alcohols, aliphatic amine alkylene oxide adducts, and fatty acid amide alkylene oxide adducts.

Higher alcohols are linear or branched, unsaturated or saturated higher alcohols normally having 8 to 22 carbon atoms. Alkyl or alkenyl phenols are linear or branched, unsaturated or saturated alkyl or alkenyl phenols normally having 7 to 22 carbon atoms. Fatty acids are linear or branched, unsaturated or saturated fatty acids normally having 10 to 22 carbon atoms. Polyvalent alcohols are polyvalent alcohols normally having 3 to 12 carbon atoms. Aliphatic amines are linear or branched, unsaturated or saturated aliphatic amines normally having 8 to 22 carbon atoms.

Examples of alkyleneoxy groups of alkylene oxide adducts include an ethyleneoxy group, prolyleneoxy group, butyleneoxy group and styreneoxy group. The moiety to which alkylene oxide is added may be that composed of one type of alkyleneoxy group or that composed of two or more alkyleneoxy groups. In the case of being composed of two or more alkyleneoxy groups, there are no particular limitations on the addition form of the alkylene oxide. Examples of addition forms of alkylene oxide include random addition, block addition and combinations of random addition and block addition. The number of additions of alkylene oxide is normally 1 mole to 20 moles.

Examples of anionic surfactants include known anionic surfactants. Specific examples include soaps, alkyl benzene sulfonates, higher alcohol sulfates, alkyl sulfates, sulfates of higher alcohol alkylene oxide adducts, α-sulfo fatty acid esters, α-olefin sulfonates, alkane sulfonates and monoalkyl phosphates.

Alkyls described here are linear or branched alkyls normally having 10 to 14 carbon atoms. Higher alcohols are linear or branched, unsaturated or saturated higher alcohols normally having 8 to 24 carbon atoms. Fatty acids are linear or branched, unsaturated or saturated fatty acids normally having 6 to 22 carbon atoms. α-olefins are α-olefins normally having 12 to 18 carbon atoms. Alkanes are linear or branched alkanes normally having 14 to 18 carbon atoms.

Examples of alkyleneoxy groups of alkylene oxide adducts include an ethyleneoxy group, butyleneoxy group and styreneoxy group. The moiety to which the alkylene oxide is added may be that composed of one type of alkyleneoxy group or that composed of two or more alkyleneoxy groups . In the case of being composed of two or more alkyleneoxy groups, there are no particular limitations on the addition form of the alkylene oxide. Examples of addition forms of alkylene oxide include random addition, block addition and combinations of random addition and block addition. The number of additions of alkylene oxide is normally 1 mole to 20 moles.

Examples of amphoteric surfactants include known amphoteric surfactants. More specifically, examples include alkyl betaines and alkyl dimethyl amine oxides.

Examples of cationic surfactants include known cationic surfactants. Specific examples include alkyl trimethyl ammonium salts, dialkyl dimethyl ammonium salts and alkyl dimethyl benzyl ammonium salts.

These surfactants are preferably anionic surfactants such as alkyl benzene sulfonates, higher alcohol sulfates, alkyl sulfates, sulfates of higher alcohol alkylene oxide adducts and α-olefin sulfonates; and nonionic surfactants such as higher alcohol alkylene oxide adducts and aliphatic amine alkylene oxide adducts (excluding compounds represented by general formula (1)) from the viewpoints of having the capacity to make a compound represented by general formula (1) soluble in water or able to be emulsified and dispersed in water, water rinsability, economic feasibility and handling ease. Among these, higher alcohol alkylene oxide adducts and aliphatic amine alkylene oxide adducts having a cloud point (1% by weight) of 70°C or higher are more preferable.

Cloud point (1% by weight) is measured according to the following method. 1. 0 g of sample are weighed out into a beaker followed by dissolving by the addition of ion exchange water (and heating if necessary to dissolve) and diluting the total weight thereof to 100 g to obtain a measurement solution. Next, about 5 mL of this measurement solution are placed in a test tube followed by inserting a thermometer and heating to cause the entire contents of the test tube to become cloudy. The measurement solution is then allowed to air cool while gently stirring with the thermometer followed by reading the temperature when the measurement solution has become clear and using that measured value as the cloud point (1% by weight).

Specific examples of nonionic surfactants having a cloud point (1% by weight) of 70°C or higher include 9-mole ethylene oxide 3-mole propylene oxide random adducts of higher alcohols having 8 carbon atom (70°C), 9-mole ethylene oxide adducts of higher alcohols having 10 carbon atoms (80°C), 11-mole ethylene oxide adducts of nonylphenol (74°C), 9-mole ethylene oxide adducts of higher alcohols having 10 to 16 carbon atoms (75°C), 14-mole ethylene oxide 2. 5-mole propylene oxide random adducts of higher alcohols having 12 to 13 carbon atoms (81°C), 15-mold ethylene oxide adducts of higher alcohols having 12 to 14 carbon atoms (85°C or higher) and 20-mole ethylene oxide adducts of tallow-hydrogenated alkyl amines (85°C or higher).

The incorporated amount of surfactant is preferably 0.1 to 15, more preferably 0.1 to 5 and even more preferably 0.2 to 3 based on a value of 1 for the compound represented by general formula (1) from the viewpoints of obtaining in agent form and economic feasibility.

The pH of the 3D printer support material removal composition of the present invention is preferably 3.0 to 11.0, more preferably 5.0 to 9.0 and even more preferably 6.0 to 8.0 from the viewpoint of handling ease by a worker.

In the case the pH is below 3.0, pH can be adjusted with a base such as sodium hydroxide, potassium hydroxide, sodium carbonate, potassium carbonate or triethanolamine. In the case the pH exceeds 11.0, pH can be adjusted with an acid such as hydrochloric acid, sulfuric acid, lactic acid, formic acid or citric acid.

One type of these pH adjusters may be used alone or two or more types may be used in combination.

The 3D printer support material removal composition of the present invention may also contain other components within a range that does not impair the effects of the present invention. Examples of other components include solubilizing agents such as alcohols or glycols excluding compounds represented by general formula (1), builder components such as ethylenediaminetetraacetate, carboxymethyl cellulose, polyvinyl pyrrolidone or polyacrylate, thickeners, preservatives, corrosion inhibitors, pigments, colorants, fragrances, fluorescent colorants, enzymes and disinfectants.

The 3D printer support material removal composition of the present invention as explained above contains at least one type of compound selected from the compounds represented by general formula (1) and is able to prevent whitening of the surface of model material molded articles.

### <Model Material Molded Article>

The model material molded article of the present invention is a molded article that has been treated with the 3D printer support material removal composition of the present invention.

The "treatment" referred to here refers to the removal of a support material from a three-dimensional model containing a model material and a support material that supports the shape of the model material using the 3D printer support material removal composition of the present invention.

### (Model Material)

A model material is used when forming a three-dimensional model. In general, model materials used with 3D printers are observed to undergo whitening of the surface thereof.

The 3D printer support material removal composition of the present invention can be preferably used for model materials in which surface whitening is observed since it is able to prevent whitening of model material molded articles.

There are no particular limitations on the model material provided it is a model material used with 3D printers.

In the case of fused deposition modeling, examples of model materials include those containing a thermoplastic resin and plasticizer.

Examples of thermoplastic resins include acrylonitrile-butadiene-styrene (ABS) resin, acrylate-styrene-acrylonitrile (ASA) resin, polycarbonate (PC) resin, PC/ABS alloy, polylactic acid resin, hydrophobic polysulfone resin, polyphenylsulfone resin, polyetherimide resin and polyamide resin.

Examples of plasticizers include polyester-based plasticizers, polyvalent alcohol ester-based plasticizers, polyvalent carboxylic acid ester-based plasticizers and phosphate ester-based plasticizers.

In the case of ink jet modeling, examples of model materials include those containing a photocurable resin and a photopolymerization initiator.

Examples of photocurable resins include acrylic-based monomers; and photocurable resins such as epoxy acrylate-based oligomers, urethane acrylate-based oligomers, and polyester acrylate-based oligomers.

Examples of acrylic-based monomers include photopolymerizable acrylic-based monomers. Examples of photopolymerizable acrylic-based monomers include non-functional acrylic-based monomers, monofunctional acrylic-based monomers and polyfunctional acrylic-based monomers.

Examples of nonfunctional acrylic-based monomers include methyl (meth)acrylate, ethyl (meth)acrylate, propyl (meth)acrylate, butyl (meth)acrylate, isobutyl (meth)acrylate, tertiary-butyl (meth)acrylate, 2-ethylhexyl (meth)acrylate, octyl (meth)acrylate, isodecyl (meth)acrylate, lauryl (meth)acrylate, tridecyl (meth)acrylate, cetyl (meth)acrylate, stearyl (meth)acrylate, cyclohexyl (meth)acrylate and benzyl (meth)acrylate.

In the present description, "methyl (meth) acrylate" refers to "methyl acrylate" and its corresponding "methyl methacrylate", and this applies similarly to other alkyl groups.

Examples of monofunctional acrylic-based monomers include (meth)acrylic acid, diethylaminoethyl (meth)acrylate, 2-hydroxyethyl (meth)acrylate, 2-hydroxypropyl (meth)acrylate, glycidyl (meth)acrylate and tetrahydrofurfuryl (meth)acrylate.

Examples of polyfunctional acrylic-based monomers include ethylene di(meth)acrylate, diethylene glycol di(meth)acrylate, 1,3-butylene di(meth)acrylate, triethylene glycol di(meth)acrylate, allyl (meth)acrylate, tetraethylene glycol di(meth)acrylate, trimethylolpropane tri(meth)acrylate, decaethylene glycol di(meth)acrylate, pentaerythritol tetra(meth)acrylate and pentadecaethylene glycol di(meth)acrylate.

Examples of epoxy acrylate-based oligomers include Ebecryl 3708 manufactured by Daicel-Scitech Ltd. and CN2003 manufactured by Sartomer Corp.

Examples of urethane acrylate-based oligomers include Ebecryl 210, Ebecryl 230, Ebecryl 244, Ebecryl 270, Ebecryl 4858, Ebecryl 8402 and Ebecryl 9270 manufactured by Daicel-Scitech Ltd.; U-200PA, UA122P, UA160TM and U108A manufactured by Shin-Nakamura Chemical Co., Ltd.; UV2000B, UV3000B, UV3200B, UB3310B and UB3700B manufactured by Nippon Synthetic Chemical Industry Co., Ltd.; and CN9006 and C9007 manufactured by Sartomer Corp.

Examples of polyester acrylate-based oligomers include Ebecryl 812, Ebecryl 853 and Ebecryl 884 manufactured by Daicel-Scitech Ltd.

Examples of photopolymerization initiators include known radical-based photopolymerization initiators having photosensitivity in the ultraviolet range to near infrared range, and radical-based visible photopolymerization initiators having photosensitivity in the 380 nm to 780 nm wavelength range.

Examples of radical-based photopolymerization initiators include benzoin and benzoin derivatives such as benzoin diethyl ether and benzoin isopropyl ether; acetophenone and acetophenone derivatives such as 2,2-dimethoxy-2-phenylacetophenone; anthraquinone derivatives such as 2-methylanthraquinone, 2-chloroanthraquinone, 2-ethylanthraquinone and 2-t-butylanthraquinone; oxanthone and thioxanthone derivatives such as 2,4-dimethylthioxanthone; benzophenone and benzophenone derivatives such as 4-benzoyl-4'-dimethyldiphenyl sulfide, 4,4'-dichlorobenzophenone and N,N-dimethylaminobenzophenone, and 2,4,6-trimethylbenzoyl diphenylphosphine oxide.

Examples of radical-based visible photopolymerization initiators include camphorquinone, benzyl, trimethylbenzoyl diphenylphosphine oxide and methylthioxanthone.

### (Support Material)

A support material is used when modeling a three-dimensional model. The support material supports the shape of the model material until the model material solidifies.

There are no particular limitations on the support material provided it is a support material that is used in fused deposition modeling and ink jet modeling.

In the case of fused deposition modeling, examples of support materials include those containing a thermoplastic acrylic-based resin, polyvinyl alcohol and plasticizer.

Examples of thermoplastic acrylic-based resins include thermoplastic acrylic-based resins containing copolymers with other monomers such as (meth)acrylic acid, itaconic acid, maleic acid, fumaric acid, methyl (meth)acrylate, ethyl (meth)acrylate, propyl (meth)acrylate, butyl (meth)acrylate, 2-ethylhexyl (meth)acrylate, styrene, α-methylene-γ-valerolactone, α-hydroxyacrylic acid, vinyl alcohol, polyethylene glycol acrylate, polyethylene glycol methacrylate, methyl vinyl ether, styrene sulfonate, vinyl acetate, vinyl propionate, adamantyl methacrylate, ethylene and propylene.

Examples of plasticizers include the same plasticizers as those contained in model materials.

In the case of ink jet modeling, examples of support materials include those containing a photocurable resin, photopolymerization initiator, water-soluble viscosity adjuster and lubricant.

Examples of photocurable resins are similar to the photocurable resins contained in model materials.

One example of a difference between photocurable resins contained in support materials and photocurable resins contained in model materials is that photocurable resins contained in support materials have a lower degree of polymerization than those contained in model materials.

Examples of photopolymerization initiators include the same photopolymerization initiators as those contained in model materials.

Examples of water-soluble viscosity adjusters include polyethylene glycol and polyvalent alcohols.

Examples of lubricants include glycerin (which may also function as a water-soluble viscosity adjuster).

Examples of support materials used in fused deposition modeling and ink jet modeling may also further include those containing water-soluble polymers such as polyethylene glycol poly(ethylene glycol/propylene glycol), carboxymethyl cellulose or starch; polyether esters; polyether ester amides; graft polymers obtained by grafting a polymer such as polyacrylic acid having a hydrophilic group to hydrophobic rubber; graft polymers obtained by grafting polyoxazoline to silicone; hydrophilic thermoplastic elastomers such as ionic elastomers; and water-insoluble polymers such as styrene-butadiene copolymers, and thermoplastic elastomers.

In the case of the model material molded article of the present invention as explained above, the support material is removed and surface whitening can be prevented by using a 3D printer support material removal composition containing at least one type of compound selected from compounds represented by general formula (1).

### <Method for Producing Model Material Molded Article>

The method for producing a model material molded article of the present invention comprises a step for removing a support material that supports the shape of the model material from a three-dimensional model containing the model material and the support material using the 3D printer support material removal composition of the present invention. In the present embodiment, the method for producing a model material molded article comprises (Step A) a step for producing a three-dimensional model composed of a model material supported with a support material using a 3D printer, (Step B) a step for removing the support material using the 3D printer support material removal composition of the present invention after Step A, and (Step C) a step for treating the model material molded article with a rinsing solution after Step B as necessary.

Step A is a step for producing a three-dimensional model composed of a model material supported with a support material using a 3D printer. The method used to produce the three-dimensional model using a 3D printer is preferably fused deposition modeling or ink jet modeling.

Step B is a step for removing the support material from the three-dimensional model using the 3D printer support material removal composition of the present invention.

The 3D printer support material removal composition may be prepared by mixing each component in advance or may be prepared by mixing each component immediately prior to use.

The 3D printer support material removal composition may be used in undiluted form or may be used after preparing by mixing each component. In Step B, the 3D printer support material removal composition is also referred to as a treatment solution. The concentration of a compound represented by general formula (1) in the treatment solution is preferably 0.05% by weight to 5.0% by weight and more preferably 0.2% by weight to 1.0% by weight based on the total weight of the treatment solution from the viewpoints of economic feasibility and workability.

Step B is carried out by contacting the treatment solution with a three-dimensional model. Examples of the method used to contact the treatment solution with the three-dimensional model include immersion, immersion and shaking, immersion and stirring, immersion and bubbling, in-liquid jetting and immersion and ultrasonic cleaning; and immersion, immersion and stirring and immersion and ultrasonic cleaning are preferable from the viewpoints of shortening contact time and simplicity.

The temperature of the treatment solution in Step B is preferably 10°C or higher and more preferably 20°C or higher from the viewpoint of increasing the dissolution rate of the support material. The temperature of the treatment solution is preferably 60°C or lower and more preferably 40°C or lower from the viewpoint of reducing the effect of the treatment solution on the model material.

The duration of Step B is suitably adjusted corresponding to such factors as the residual amount of the support material. A portion of the support material may be removed in advance in order to shorten contact time.

Examples of methods used to remove the support material in advance include mechanical methods and chemical methods.

Examples of mechanical methods include a method consisting of removing a portion of the support material by applying vibrations or other mechanical load, a method consisting of removing a portion of the support material using a water jet, and a method consisting of rubbing off the support material with the fingers. Examples of chemical methods include a method consisting of dissolving the support material using an organic solvent.

Step B may also be carried out for a plurality of times, and in the case of carrying out for a plurality of times, the treatment solution may be replaced with fresh treatment solution each time.

Step C is a step for treating the model material molded article with a rinsing solution.

Step C is carried out by contacting the rinsing solution with the model material molded article using water or treatment solution for the rinsing solution. Examples of the method used to contact the rinsing solution with the model material molded article include immersion, immersion and shaking, immersion and stirring, immersion and bubbling, in-liquid jetting and immersion and ultrasonic cleaning. Immersion, immersion and stirring and immersion and ultrasonic cleaning are preferable from the viewpoints of shortening contact time and simplicity.

The duration of contact between the rinsing solution and the model material molded article is suitably set corresponding to such factors as the 3D printer support material removal composition or the residual amount of the support material.

Step C may also be carried out for a plurality of times, and although the rinsing solution may be replaced with fresh rinsing solution each time Step C is carried out, water is preferably used for the final rinsing solution. Examples of water used for the rinsing solution include ion exchange water, distilled water and tap water.

The model material molded article of the present invention is obtained by going through Step A, Step B and Step C.

The method for producing a model material molded article of the present invention is not limited to the previously described embodiment, but rather may or may not include Step A and may or may not include Step C.

The method for producing a model material molded article of the present invention preferably includes Step C from the viewpoints of preventing whitening of the model material molded article.

In the method for producing a model material molded article of the present invention as explained above, the 3D printer support material removal composition of the present invention is used to remove the support material and whitening of the model material molded article can be prevented.

### <Model Material Molded Article Finishing Agent>

The model material molded article finishing agent of the present invention contains at least one type of compound selected from compounds represented by the following general formula (1):

R-O-[(EO)ₐ/(PO)_{b}]-H ··· (1)

(wherein, R represents a hydrocarbon group having 6 to 22 carbon atoms, a represents 0 to 2 and b represents 0 to 3 in the case R represents a hydrocarbon group having 6 to 20 carbon atoms, a represents 0 to 10 and b represents 0 in the case R represents a hydrocarbon group having 21 to 22 carbon atoms, EO represents an ethyleneoxy group and PO represents a propyleneoxy group) .

Compounds represented by general formula (1) are the same as those of the 3D printer support material removal composition of the present invention.

The model material molded article finishing agent of the present invention (to also be simply referred to as the "finishing agent") is able to eliminate whitening in the case whitening is observed in cleaned model material molded articles.

Treatment of model material molded articles is carried out by contacting the treatment solution with a whitened model material molded article using the aforementioned treatment solution for the finishing agent. Examples of the method used to contact the treatment solution with the whitened model material molded article include immersion, immersion and shaking, immersion and stirring, immersion and bubbling, in-liquid jetting and immersion and ultrasonic cleaning. Immersion, immersion and stirring and immersion and ultrasonic cleaning are preferable for the contact method from the viewpoints of shortening contact time and simplicity. Following treatment with the finishing agent, the model material molded article is preferably finally rinsed using water such as ion exchange water, distilled water or tap water.

The finishing agent of the present invention as explained above contains at least one type of compound selected from compounds represented by general formula (1) and is able to eliminate whitening of model material molded articles.

### [Examples]

Although the following provides a more detailed explanation of the present invention, the present invention is not limited in any way by these examples.

### [Test 1]

After having removed a support material using the 3D printer support material removal composition of the present invention, testing was carried out to confirm prevention of whitening of the model material molded article, residual support material and effects on model material molded articles.

### [Examples 1 to 50 and Comparative Examples 1 to 19]

### <Preparation of 3D Printer Support Material Removal Compositions>

A compound represented by general formula (1) (to also be referred to as the "General Formula (1) Compound") and a surfactant were added to ion exchange water and mixed to prepare 3D printer support material removal compositions (treatment liquids) according to the compositions (wt%) shown in Tables 1 to 8. The pH of the treatment solutions was adjusted to 7.0 by using sodium hydroxide or citric acid in the 3D printer support material removal compositions as necessary. However, pH was not adjusted in Comparative Example 6 and Comparative Example 15. The pH in Comparative Example 6 and Comparative Example 15 was 14.0 in both cases.

### <3D Printer and Three-Dimensional Model Raw Materials>

The following were used for the 3D printer and three-dimensional model raw materials.
3D printer: Agilista-3200 (ink jet type), Keyence Corp.
Model material: AR-M2 (acrylic-based UV-curable resin (non-water-soluble), Keyence Corp.
Support material: AR-S1 (acrylic-based UV-curable resin (water-soluble), Keyence Corp.

### <Production of Three-Dimensional Model>

A three-dimensional model measuring 20 mm in vertical length, 20 mm in horizontal length and 5 mm thick was produced at a deposition pitch of 15 µm in a high resolution mode (Step A).

### <Pretreatment of Three-Dimensional Model>

Excess support material was scraped off using the smooth surface of a spatula in order to make the amount of support material adhered to the surface of the three-dimensional model constant followed by adjusting the weight of the three-dimensional model to 2.25 g (residual amount of support material on the surface of the three-dimensional model: 0.18 g) and using the resulting three-dimensional model as a test piece.

### <3D Printer Support Material Removal Test>

200 mL of treatment solution were placed in a glass bottle (Mayonnaise 225, Nihon Yamamura Glass Co., Ltd.) followed by placing the test piece therein and carrying out immersion treatment according to the immersion conditions indicated below (Step B). Next, the immersion-treated test piece was removed from the glass bottle and subjected to rinsing under the conditions indicated below (Step C). Subsequently, the test piece was dried under the drying conditions indicated below to obtain a test piece (model material molded article) for evaluation.

### (Immersion Conditions)

Treatment solution temperature: 25°C (except for the use of a temperature of 10°C in Example 34 and 40°C in Example 35)
Immersion time: 4 hours

### (Rinsing Conditions)

Rinsing solution: Ion exchange water
Rinsing solution temperature: 20°C
Rinsing method: 100 mL of rinsing solution were placed in a Mayonnaise 225 glass bottle, and after placing the test piece therein after having undergone immersion treatment, a lid was placed on the bottle followed immediately by mixing by shaking up and down 30 times and then removing the test piece.
Number of rinsing times: 2 (rinsing solution was replaced each time)

### (Drying Conditions)

Drying apparatus: Equipment dryer (Yamato Lab-Ware Drying Oven Model DG-81, Yamato Scientific Co., Ltd.)
Drying temperature: 45°C
Drying time: 15 hours

### <Evaluation Methods>

### (Prevention of Whiteness of Test Pieces for Evaluation>

Whitening status of the surfaces of the test pieces for evaluation was visually evaluated in accordance with the following evaluation criteria. Test pieces evaluated as G (Good) or F (Fair) were judged to be acceptable. The results are shown in Tables 1 to 8.

### <<Evaluation Criteria>>

G (Good): Whitening of test piece for evaluation not confirmed (letters able to be seen clearly when test piece for evaluation placed on a piece of paper having letters written thereon).
F (Fair) : Whitening of test piece for evaluation slightly confirmed (letters difficult to see when test piece for evaluation placed on a piece of paper having letters written thereon).
P (Poor) : Whitening of test piece for evaluation confirmed (letters unable to be seen when test piece for evaluation placed on a piece of paper having letters written thereon).

### (Effect of Residual Support Material on Test Pieces for Evaluation)

The presence of residual support material and the surface status of the test pieces for evaluation were confirmed visually and evaluated in accordance with the following evaluation criteria. Test pieces evaluated as F (Fair) were judged to be acceptable. The results are shown in Tables 1 to 8.

### <<Evaluation Criteria>>

F (Fair): Residual support material not present, and swelling, dissolution, cracking or other effects on test pieces for evaluation not observed
P (Poor): Residual support material present, or swelling, dissolution, cracking or other effects on test pieces for evaluation observed.

### [Test 2]

Test 2 was carried out to confirm whether or not the 3D printer support material removal composition of the present invention is effective as a finishing agent for eliminating whitening of cleaned model material molded articles in which whitening has been observed. In Test 2, after having removed support material using ion exchange water, testing was carried out for confirming prevention of whitening of model material molded articles, residual support material and effects on model material molded articles by using the 3D printer support material removal composition of the present invention as a finishing agent.

### [Examples 51 to 57 and Comparative Examples 20 to 24]

### <Preparation of Finishing Agent>

A compound represented by general formula (1) and a surfactant were added to ion exchange water and mixed followed by the addition of model material molded article finishing agent (finishing agent) according to the compositions (wt%) shown in Tables 9 and 10. The pH of the finishing agents was adjusted to 7. 0 by using sodium hydroxide or citric acid in the 3D printer support material removal compositions as necessary.

### <3D Printer and Three-Dimensional Model Raw Materials>

The 3D printer and three-dimensional model raw materials were the same as those used in Test 1.

### <Production of Three-Dimensional Model>

The three-dimensional model was produced in the same manner as Test 1.

### <Pretreatment of Three-Dimensional Model>

The three-dimensional model was pretreated in the same manner as Test 1.

### <3D Printer Support Material Removal Test>

Test pieces were obtained by carrying out treatment under the conditions indicated below.

### (Immersion Conditions)

Treatment solution: Ion exchange water
Treatment solution temperature: 25°C
Removal time: 4 hours

### (Rinsing Conditions)

Rinsing was carried out in the same manner as Test 1.

### (Drying Conditions)

Drying was carried out in the same manner as Test 1.

### <Model Material Molded Article Finishing Test>

Finishing treatment was carried out under the conditions indicated below to obtain test pieces for evaluation (model material molded articles).

### (Finishing Conditions)

First round: The finishing agents shown in Tables 9 and 10 at 20°C were used as finishing agents, 100 mL of finishing agent were placed in a Mayonnaise 225 glass bottle, and after placing the test piece for evaluation in the glass bottle and allowing to stand undisturbed for 2 hours, the test pieces were removed.

Second round: 100 mL of ion exchange water at 20°C were placed in a Mayonnaise 225 glass bottle and a lid was placed thereon followed immediately by mixing by shaking up and down 30 times and then removing the test piece.

Third round: The ion exchange water was replaced with fresh ion exchange water followed by carrying out finishing in the same manner as the second round.

### (Drying Conditions)

Drying was carried out in the same manner as Test 1.

### <Evaluation Methods>

Prevention of whitening of the test pieces for evaluation, residual support material and effects on the test pieces for evaluation were evaluated in the same manner as Test 1. The results are shown in Tables 9 and 10.

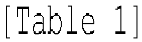

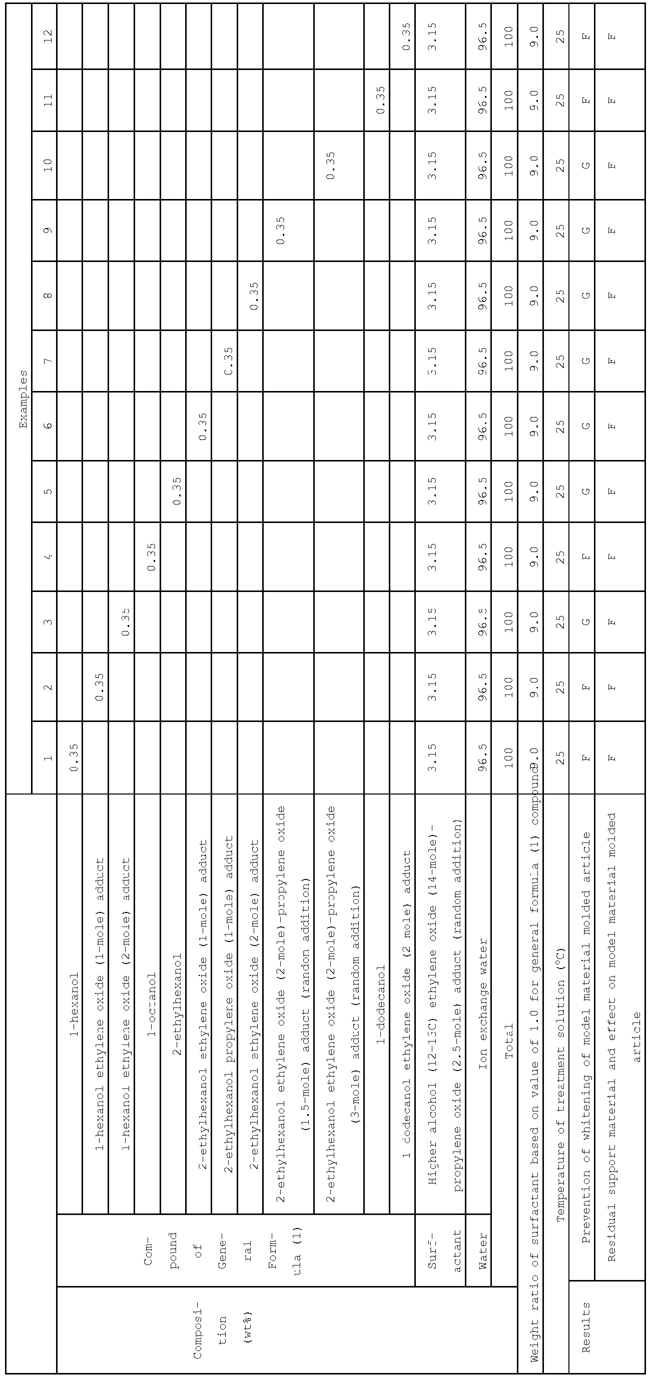

**[Table 2]**

| | | | Examples | | | | | | | | | | |
|---|---|---|---|---|---|---|---|---|---|---|---|---|---|
| | | | 13 | 14 | 15 | 16 | 17 | 18 | 19 | 20 | 21 | 22 | 23 |
| Composition (wt%) | Compound of Gene-ral Form-ula (1) | 2-butyl-1-octanol | 0.35 | | | | | | | | | | |
| | | 2-tridecanol | | 0.35 | | | | | | | | | |
| | | 2-tridecanol ethylene oxide (2-mole) adduct | | | 0.35 | | | | | | | | |
| | | 4-nonylphenol | | | | 0.35 | | | | | | | |
| | | 1-hexadecanol | | | | | 0.35 | | | | | | |
| | | 1-octadecanol | | | | | | 0.35 | | | | | |
| | | 9-octadecen-1-ol | | | | | | | 0.35 | | | | |
| | | 2-octyl-1-dodecanol | | | | | | | | 0.35 | | | |
| | | 1-docosanol | | | | | | | | | 0.35 | | |
| | | 1-docosanol ethylene oxide (5-mole) adduct | | | | | | | | | | 0.35 | |
| | | 1-docosanol ethylene oxide (10-mole) adduct | | | | | | | | | | | 0.35 |
| | Surf-actant | Higher alcohol (113C) ethylene oxide (1mole)-propylene oxide (2.mole) adduct (random addition) | 3.15 | 3.15 | 3.15 | 3.15 | 3.15 | 3.15 | 3.15 | 3.15 | 3.15 | 3.15 | 3.15 |
| | Water | Ion exchange water | 96.5 | 96.5 | 96.5 | 96.5 | 96.5 | 96.5 | 96.5 | 96.5 | 96.5 | 96.5 | 96.5 |
| | Total | | 100 | 100 | 100 | 100 | 100 | 100 | 100 | 100 | 100 | 100 | 100 |
| Weight ratio of surfactant based on value of 1.0 for general formula (1) compound | | | 9.0 | 9.0 | 9.0 | 9.0 | 9.0 | 9.0 | 9.0 | 9.0 | 9.0 | 9.0 | 9.0 |
| Temperature of treatment solution (°C) | | | 25 | 25 | 25 | 25 | 25 | 25 | 25 | 25 | 25 | 25 | 25 |
| Results | Prevention of whitening of model material molded article | | G | G | G | G | G | G | G | G | G | G | G |
| | Residual suppor material and effect on model material molded article | | F | F | F | F | F | F | F | F | F | F | F |

**[Table 3]**

| | | | Examples | | | | | |
|---|---|---|---|---|---|---|---|---|
| | | | 24 | 25 | 26 | 27 | 28 | 29 |
| Composition (wt%) | Compound of General Formula (1) | 2-ethylhexanol ethylene oxide (2-mole)-propylene oxide (1.5 mole) adduct (random addition) | 0.35 | 0.35 | 0.35 | 0.35 | 0.35 | 0.35 |
| | Surfactant | Higher alcohol (12-13C) ethylene oxide (14-mole)-propylene oxide (2.5-mole) adduct (random addition) | 0.05 | 0.2 | 0.65 | 1.3 | 1.95 | 3.9 |
| | Water | Ion exchange water | 99.6 | 99. 45 | 99 | 98.35 | 97.7 | 95. 75 |
| | Total | | 100 | 100 | 100 | 100 | 100 | 100 |
| Weight ratio of surfactant based on value of 1.0 for general formula (1) compound | | | 0.14 | 0.57 | 1.86 | 3.71 | 5.57 | 11.10 |
| Temperature of treatment solution (°C) | | | 25 | 25 | 25 | 25 | 25 | 25 |
| Results | Prevention of whitening of model material molded article | | G | G | G | G | G | G |
| | Residual support material and effect on model material molded article | | F | F | F | F | F | F |

**[Table 4]**

| | | | Examples | | | | | |
|---|---|---|---|---|---|---|---|---|
| | | | 30 | 31 | 32 | 33 | 34 | 35 |
| Composition (wt%) | Compound of General Formula (1) | 2-ethylhexanol ethylene oxide (2-mole)-propylene oxide (1.5 mole) adduct (random addition) | 0.14 | 0.21 | 0.7 | 3.5 | 0.35 | 0.35 |
| | Surfactant | Higher alcohol (12-13C) ethylene oxide (14-mole)-propylene oxide (2.5-mole) adduct (random addition) | 0.26 | 0.39 | 1.3 | 6.5 | 0.65 | 0.65 |
| | Water | Ion exchange water | 99.6 | 99. 4 | 98 | 90 | 99 | 99 |
| | Total | | 100 | 100 | 100 | 100 | 100 | 100 |
| Weight ratio of surfactant based on value of 1.0 for general formula (1) compound | | | 1.86 | 1.86 | 1.86 | 1.86 | 1.86 | 1.86 |
| Temperature of treatment solution (°C) | | | 25 | 25 | 25 | 25 | 10 | 40 |
| Results | Prevention of whitening of model material molded article | | F | G | G | G | G | G |
| | Residual support material and effect on model material molded article | | F | F | F | F | F | F |

**[Table 5]**

| | | | Examples | | | | | | | |
|---|---|---|---|---|---|---|---|---|---|---|
| | | | 36 | 37 | 38 | 39 | 40 | 41 | 42 | 43 |
| Composition (wt%) | Compound of General Formula (1) | 2-ethylhexanol ethylene oxide (2-mole) adduct | 0.35 | 0.35 | 0.35 | 0.35 | 0.35 | 0.35 | 0.35 | 0.35 |
| | Surfactant | Higher alcohol (10-16C) ethylene oxide (9-mole) adduct | 0.65 | | | | | | | |
| | | Higher alcohol (12-13C) ethylene oxide (6-mole)-propylene oxide (2.5-mole) adduct (random addition) | | 0.25 | | | | | | |
| | | Higher alcohol (12-13C) ethylene oxide (14-mole)-propylene oxide (2.5-mole) adduct (random addition) | | 0.4 | 0.65 | | | | | |
| | | Tallow-hydrogenated amine (18C) ethylene oxide (20-mole) adduct | | | | 0.65 | | | | |
| | | Sodium dodecyl sulfate | | | | | 0.65 | | | |
| | | Sodium α-olefin sulfonate | | | | | | 0.2 | | |
| | | Sodium polyoxyethylene alkyl (10-16C) ether sulfate | | | | | | | 0.2 | |
| | | Lauryl dimethylamine oxide | | | | | | | | 0.2 |
| | | Benzalkonium chloride | | | | | | | | |
| | Water | Ion exchange water | 99 | 99 | 99 | 99 | 99 | 99. 45 | 99. 45 | 99. 45 |
| | Total | | 100 | 100 | 100 | 100 | 100 | 100 | 100 | 100 |
| Weight ratio of surfactant based on value of 1.0 for general formula (1) compound | | | 1.86 | 1.86 | 1.86 | 1.86 | 1.86 | 0.57 | 0.57 | 0.57 |
| Temperature of treatment solution (°C) | | | 25 | 25 | 25 | 25 | 25 | 25 | 25 | 25 |
| Results | Prevention of whitening of model material molded article | | G | G | G | G | G | G | G | G |
| | Residual support material and effect on model material molded article | | F | F | F | F | F | F | F | F |

**[Table 6]**

| | | | Examples | | | | | | |
|---|---|---|---|---|---|---|---|---|---|
| | | | 44 | 45 | 46 | 47 | 48 | 49 | 50 |
| Composition (wt%) | Compound of General Formula (1) | 2-ethylhexanol ethylene oxide (2-mole) adduct | 0.35 | 0.35 | 0.35 | 0.35 | 0.35 | 0.35 | 0.35 |
| | Surfactant | Higher alcohol (10-16C) ethylene oxide (9-mole) adduct | | 1. 05 | | | | | |
| | | Higher alcohol (12-13C) ethylene oxide (6-mole) -propylene oxide (2.5-mole) adduct (random addition) | | | | | | | |
| | | Higher alcohol (12-13C) ethylene oxide (14-mole)-propylene oxide (2.5-mole) adduct (random addition) | | | | | | 0.35 | 0.3 |
| | | Tallow-hydrogenated amine (18C) ethylene oxide (20-mole) adduct | | | 0.3 | | | 0.15 | |
| | | Sodium dodecyl sulfate | | | | 0.1 | | | 0.05 |
| | | Sodium α-olefin sulfonate | | | | | | | |
| | | Sodium polyoxyethylene alkyl (10-16C) ether sulfate | | | | | | | |
| | | Lauryl dimethylamine oxide | | | | | 0.1 | | |
| | | Benzalkonium chloride | 0.2 | | | | | | |
| | Water | Ion exchange water | 99. 45 | 98.6 | 99.35 | 99.55 | 99.55 | 99.15 | 99.3 |
| | Total | | 100 | 100 | 100 | 100 | 100 | 100 | 100 |
| Weight ratio of surfactant based on value of 1.0 for general formula (1) compound | | | 0.57 | 3.00 | 0.86 | 0.29 | 0.29 | 1.43 | 1.00 |
| Temperature of treatment solution (°C) | | | 25 | 25 | 25 | 25 | 25 | 25 | 25 |
| Results | Prevention of whitening of model material molded article | | G | G | G | G | G | G | G |
| | Residual support material and effect on model material molded article | | F | F | F | F | F | F | F |

**[Table 7]**

| | | Comparative Examples | | | | | | | | | |
|---|---|---|---|---|---|---|---|---|---|---|---|
| | | 1 | 2 | 3 | 4 | 5 | 6 | 7 | 8 | 9 | 10 |
| Composition (wt%) | Ion exchange water | 100 | 99.65 | 99.65 | 99.65 | 99.65 | 93 | 96.85 | 96.85 | 96.85 | 96.85 |
| | Acetone | | 0.35 | | | | | | | | |
| | Isopropyl alcohol | | | 0.35 | | | | | | | |
| | Propylene glycol | | | | 0.35 | | | | | | |
| | Ethylene glycol monobutyl ether | | | | | 0.35 | | | | | |
| | Sodium hydroxide | | | | | | 5 | | | | |
| | Monoethanolamine | | | | | | 2 | | | | |
| | Higher alcohol (12C) ethylene oxide (5-mole) adduct | | | | | | | 3.15 | | | |
| | Mixed higher alcohols (12-13C) ethylene oxide (6-mole)-propylene oxide (2.5-mole) adduct (random addition) | | | | | | | | 1.15 | | |
| | Mixed higher alcohols (12-13C) ethylene oxide (14-mole)-propylene oxide (2.5-mole) adduct (random addition) | | | | | | | | 2 | 3.15 | |
| | Mixed higher alcohol (10-16C) ethylene oxide (9-mole) adduct | | | | | | | | | | 3.15 |
| | Tallow-hydrogenated amine (18C) ethylene oxide (20-mole) adduct | | | | | | | | | | |
| | Sodium dodecyl sulfate | | | | | | | | | | |
| | Lauryl dimethylamine oxide | | | | | | | | | | |
| | Benzalkonium chloride | | | | | | | | | | |
| | Total | 100 | 100 | 100 | 100 | 100 | 100 | 100 | 100 | 100 | 100 |
| Temperature of treatment solution (°C) | | 25 | 25 | 25 | 25 | 25 | 25 | 25 | 25 | 25 | 25 |
| Results | Prevention of whitening of model material molded article | P | P | P | P | P | P | P | P | P | P |
| | Residual support material and effect on model material molded article | F | F | F | F | F | F | F | F | F | F |

**[Table 8]**

| | | Comparative Examples | | | | | | | | |
|---|---|---|---|---|---|---|---|---|---|---|
| | | 11 | 12 | 13 | 14 | 15 | 16 | 17 | 18 | 19 |
| Composition (wt%) | Ion exchange water | 96.85 | 96.85 | 96.85 | 96.85 | 73 | | | | |
| | Acetone | | | | | | 100 | | | |
| | Isopropyl alcohol | | | | | | | 100 | | |
| | Propylene glycol | | | | | | | | 100 | |
| | Ethylene glycol monobutyl ether | | | | | 10 | | | | 100 |
| | Sodium hydroxide | | | | | 5 | | | | |
| | Monoethanolamine | | | | | 2 | | | | |
| | Higher alcohol (12C) ethylene oxide (5-mole) adduct | | | | | | | | | |
| | Mixed higher alcohol (113C) ethylene oxide (1mole)-propylene oxide (2.mole) adduct (random addition) | | | | | | | | | |
| | Mixed higher alcohol (113C) ethylene oxide (1mole)-propylene oxide (2.mole) adduct (random addition) | | | | | | | | | |
| | Mixed higher alcohol (10-16C) ethylene oxide (9-mole) adduct | | | | | | | | | |
| | Tallow-hydrogenated amine (18C) ethylene oxide (20-mole) adduct | 3.15 | | | | | | | | |
| | Sodium dodecyl sulfate | | 3.15 | | | 10 | | | | |
| | Lauryl dimethylamine oxide | | | 3.15 | | | | | | |
| | Benzalkonium chloride | | | | 3.15 | | | | | |
| | Total | 100 | 100 | 100 | 100 | 100 | 100 | 100 | 100 | 100 |
| Temperature of treatment solution (°C) | | 25 | 25 | 25 | 25 | 25 | 25 | 25 | 25 | 25 |
| Results | Prevention of whitening of model material molded article | P | P | P | P | P | P | P | P | P |
| | Residual support material and effect on model material molded article | F | F | F | F | F | F | F | F | F |

According to the results of Tables 1 to 8, Examples 1 to 50 that applied the present invention were determined to remove support material and prevent whitening of model material molded articles without having a detrimental effect on the surface of the model material molded articles. On the other hand, Comparative Examples 1 to 19 were determined to allow residual whitening of model material molded articles, thereby failing to demonstrate the effects of the present invention.

**[Table 9]**

| | | | Examples | | | | | | |
|---|---|---|---|---|---|---|---|---|---|
| | | | 51 | 52 | 53 | 54 | 55 | 56 | 57 |
| Finishing Agent (wt%) | General Formula (1) Compound | 2-ethylhexanol | 0.35 | | | | | | |
| | | 2-ethylhexanol ethylene oxide (1-mole) adduct | | 0.35 | | | | | |
| | | 2-ethylhexanol ethylene oxide (2-mole) adduct | | | 0.35 | | | 0.35 | 0.35 |
| | | 2-butyl-1-octanol | | | | 0.35 | | | |
| | | 2-tridecyl alcohol | | | | | 0.35 | | |
| | Surfactant | Mixed higher alcohol (12-13C) ethylene oxide (14-mole)-propylene oxide (2.5-mole) adduct (random addition) | 3.15 | 3.15 | 3.15 | 3.15 | 3.15 | 0.65 | 1. 75 |
| | Water | Ion exchange water | 96.5 | 96.5 | 96.5 | 96.5 | 96.5 | 99 | 97.9 |
| | Total | | 100 | 100 | 100 | 100 | 100 | 100 | 100 |
| Weight ratio of surfactant based on value of 1.0 for general formula (1) compound | | | 9.0 | 9.0 | 9.0 | 9.0 | 9.0 | 1.86 | 5.0 |
| Results | Prevention of whitening of model material molded article | | G | G | G | G | G | G | G |
| | Residual support material and effect on model material molded article | | F | F | F | F | F | F | F |

**[Table 10]**

| | | Comparative Examples | | | | |
|---|---|---|---|---|---|---|
| | | 20 | 21 | 22 | 23 | 24 |
| Finishing Agent (wt%) | Ion exchange water | 100 | 99.65 | 99.65 | 96.85 | 96.85 |
| | Isopropyl alcohol | | 0.35 | | | |
| | Propylene glycol | | | 0.35 | | |
| | Higher alcohol (12-13C) ethylene oxide (14-mole)-propylene oxide (2.5-mole) adduct (random addition) | | | | 3.15 | |
| | Sodium dodecyl sulfate | | | | | 3.15 |
| | Total | 100 | 100 | 100 | 100 | 100 |
| Results | Prevention of whitening of model material molded article | P | P | P | P | P |
| | Residual support material and effect on model material molded article | F | F | F | F | F |

According to the results of Tables 9 and 10, Examples 51 to 57 that applied the present invention were determined to be able to remove whitening of model material molded articles in the case of using as a finishing agent. On the other hand, Comparative Examples 20 to 24 were determined to allow residual whitening of model material molded articles, thereby failing to demonstrate the effects of the present invention.

### INDUSTRIAL APPLICABILITY

Use of the 3D printer support material removal composition of the present invention makes it possible to prevent whitening of model material molded articles. Thus, according to the 3D printer support material removal composition and model material molded article finishing agent of the present invention, since posttreatment of the surfaces of whitened model material molded articles is no longer required, highly precise model material molded articles can be obtained in accordance with CD-CAD or CD-CG data while maintaining the texture of the model material.

## Claims

1. A 3D printer support material removal composition, comprising: at least one type of compound selected from compounds represented by the following general formula (1):
R-O-[(EO)ₐ/(PO)_{b}]-H ··· (1)
(wherein, R represents a hydrocarbon group having 6 to 22 carbon atoms, a represents 0 to 2 and b represents 0 to 3 in the case R represents a hydrocarbon group having 6 to 20 carbon atoms, a represents 0 to 10 and b represents 0 in the case R represents a hydrocarbon group having 21 to 22 carbon atoms, EO represents an ethyleneoxy group and PO represents a propyleneoxy group).

2. A model material molded article treated with the 3D printer support material removal composition according to claim 1.

3. A method for producing a model material molded article, comprising: a step for obtaining a model material molded article by removing a support material that supports the shape of the model material from a three-dimensional model containing the model material and the support material using the 3D printer support material removal composition according to claim 1.

4. A model material molded article finishing agent, comprising: at least one type of compound selected from compounds represented by the following general formula (1):
R-O-[(EO)ₐ/(PO)_{b}]-H ··· (1)
(wherein, R represents a hydrocarbon group having 6 to 22 carbon atoms, a represents 0 to 2 and b represents 0 to 3 in the case R represents a hydrocarbon group having 6 to 20 carbon atoms, a represents 0 to 10 and b represents 0 in the case R represents a hydrocarbon group having 21 to 22 carbon atoms, EO represents an ethyleneoxy group and PO represents a propyleneoxy group) .
